(19)

**Europäisches Patentamt**
**European Patent Office**
**Office européen des brevets**

(11) **EP 4 633 161 A1**

(12) **EUROPEAN PATENT APPLICATION**

(43) Date of publication:
**15.10.2025 Bulletin 2025/42**

(21) Application number: **24305575.3**

(22) Date of filing: **09.04.2024**

(51) International Patent Classification (IPC):
**H04N 19/30** (2014.01)          **H04N 19/46** (2014.01)
**H04N 19/70** (2014.01)

(52) Cooperative Patent Classification (CPC):
**H04N 19/30; H04N 19/46; H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE MEUR, Olivier**
  **35160 TALENSAC (FR)**
• **AUMONT, Franck**
  **35770 VERN SUR SEICHE (FR)**
• **TOUZE, David**
  **35200 RENNES (FR)**
• **PLISSONNEAU, Frederic**
  **35235 THORIGNE-FOUILLARD (FR)**
• **REINHARD, Erik**
  **35630 HEDE-BAZOUGES (FR)**

(74) Representative: **Interdigital**
**Immeuble ZEN 2**
**845 A, avenue des Champs Blancs**
**35510 Cesson-Sévigné (FR)**

(54) **ASSOCIATING PIXEL VALUE REDUCTION METHOD WITH SL-HDR**

(57)     A method comprising:
obtaining (601) a reconstructed version of a second standard dynamic range (SDR) content and SL-HDR metadata allowing generating a first high dynamic range (HDR) content from first SDR content, the SL-HDR metadata comprising energy-aware information comprising a flag indicating that the first SDR content has been pre-processed to obtain the second SDR content, the second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the reconstructed version of the first SDR content;

determining (602) from the energy-aware information whether to regenerate an output SDR content corresponding to the first SDR content from the second SDR content or to keep the second SDR content as the output SDR content;

obtaining (603) an intermediate SDR content from the output SDR content based on the determining; and,

generating (604) an output HDR content from the output SDR content.

Fig. 6

EP 4 633 161 A1

**Description**

## 1. TECHNICAL FIELD

At least one of the present embodiments generally relates to the field of display of Standard dynamic Range (SDR) video or High Dynamic Range (HDR) video and more particularly to a method and a device for controlling an energy consumed for displaying SDR or HDR video.

## 2. BACKGROUND

Recent advancements in display technologies allow for an extended dynamic range of color, luminance and contrast in images to be displayed. The term *image* refers here to an image content that can be for example a video or a still picture or image.

High-dynamic-range video (HDR video) describes video having a dynamic range greater than that of standard-dynamic-range video (SDR video). HDR-video based applications involve capture, production, content/encoding, and display. HDR capture and display devices are capable of brighter whites and deeper blacks. To accommodate this, HDR encoding standards allow for a higher maximum luminance and use at least a 10-bit dynamic range (compared to 8-bit (for non-professional) and 10-bit (for professional) dynamic ranges for SDR video) in order to maintain precision across this extended range.

HDR and SDR contents would coexist for or more of less long period. Various technologies such as SL-HDR1 (ETSI TS 103 433-1), SL-HDR2 (ETSI TS 103 433-2) or SL-HDR3 (ETSI TS 103 433-3 v1.1.1) were developed to allow distributing jointly a HDR and a SDR version of a same video content.

HDR technology offers a better viewer experience (or Quality of Experience (QoE)) of video contents, but the energy consumption is much more significant than SDR. Indeed, the display of a HDR video consumes up to two times more energy than a SDR video. A current trend in many domains being to reduce the consumption of energy, it is desirable to overcome the above drawbacks.

It is particularly desirable to propose a solution allowing controlling or reducing the energy consumed by the display of video content (SDR or HDR) while preserving as much as possible the QoE provided to the users and the artistic intent of the content creator.

## 3. BRIEF SUMMARY

In a first aspect, one or more of the present embodiments provide a method comprising:

obtaining a first standard dynamic range (SDR) content and SL-HDR metadata allowing generating a first high dynamic range (HDR) content from the first SDR content;
applying a pre-processing to the first SDR content to obtain a second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the first SDR content;
signaling energy-aware information in the SL-HDR metadata comprising a flag indicating that the first SDR content had been pre-processed to obtain the second SDR content; and,
encoding the second SDR content and the SL-HDR metadata.

In an embodiment, the energy-aware information further comprises a syntax element indicating an energy reduction ratio.

In an embodiment, the energy-aware information further comprises a syntax element indicating a process for generating the second SDR content from the first SDR content among a plurality of methods.

In an embodiment, the energy-aware information further comprises a syntax element indicating whether the first SDR content has to be regenerated to generate the output HDR content.

In a second aspect, one or more of the present embodiments provide a method comprising:

obtaining a reconstructed version of a second standard dynamic range (SDR) content and SL-HDR metadata allowing generating a first high dynamic range (HDR) content from a first SDR content, the SL-HDR metadata comprising energy-aware information comprising a flag indicating that the first SDR content has been pre-processed to obtain the second SDR content, the second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the reconstructed version of the first SDR content;
determining from the energy-aware information whether to regenerate an output SDR content corresponding to the first SDR content from the second SDR content or to keep the second SDR content as the output SDR content;
obtaining an intermediate SDR content from the output SDR content based on the determining; and,
generating the output HDR content from the output SDR content.

In an embodiment, the energy-aware information further comprises a syntax element indicating an energy reduction ratio.

In an embodiment, the energy-aware information further comprises a syntax element indicating a process used for generating the second SDR content from the first SDR content among a plurality of methods.

In an embodiment, the energy-aware information further comprises a syntax element indicating whether the first SDR content has to be regenerated to generate the output HDR content.

In an embodiment, responsive to the output SDR content corresponding to the first SDR content is regenerated from the second SDR content, the intermediate SDR content is a linear combination between the second SDR content and the output SDR content.

In an embodiment, a weighting factor used in the linear combination depends on the energy reduction ratio.

In a third aspect, one or more of the present embodiments provide a device comprising electronic circuitry configured for:

obtaining a first standard dynamic range (SDR) content and SL-HDR metadata allowing generating a first high dynamic range (HDR) content from the first SDR content;
applying a pre-processing to the first SDR content to obtain a second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the first SDR content;
signaling energy-aware information in the SL-HDR metadata comprising a flag indicating that the first SDR content had been pre-processed to obtain the second SDR content; and,
encoding the second SDR content and the SL-HDR metadata.

In a fourth aspect, one or more of the present embodiments provide a device comprising electronic circuitry configured for:

obtaining a reconstructed version of a second standard dynamic range (SDR) content and SL-HDR metadata allowing generating a first high dynamic range (HDR) content from a first SDR content, the SL-HDR metadata comprising energy-aware information comprising a flag indicating that the first SDR content has been pre-processed to obtain the second SDR content, the second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the reconstructed version of the first SDR content;
determining from the energy-aware information whether to regenerate an output SDR content corresponding to the first SDR content from the second SDR content or to keep the second SDR content as the output SDR content;
obtaining an intermediate SDR content from the output SDR content based on the determining; and,
generating the output HDR content from the output SDR content.

In an embodiment of the third or the fourth aspect, the energy-aware information further comprises at least one of a syntax element indicating an energy reduction ratio, a syntax element indicating a process used for generating the second SDR content from the first SDR content among a plurality of methods, a syntax element indicating whether the first SDR content has to be regenerated to generate the output HDR content.

In an embodiment of the third or the fourth aspect, responsive to the output SDR content corresponding to the first SDR content is regenerated from the second SDR content, the intermediate SDR content is a linear combination between the second SDR content and the output SDR content.

In an embodiment of the third or the fourth aspect, a weighting factor used in the linear combination depends on the energy reduction ratio.

In a fifth aspect, one or more of the present embodiments provide a non-transitory information storage medium storing program code instructions for implementing the method according to the first or the second aspect.

In a sixth aspect, one or more of the present embodiments provide a device computer program comprising program code instructions for implementing the method according to the first or the second aspect.

In a seventh aspect, one or more of the present embodiments provide a signal comprising second standard dynamic range (SDR) content and SL-HDR metadata allowing generating a first high dynamic range (HDR) content from a first SDR content, the SL-HDR metadata comprising energy-aware information comprising a flag indicating that the first SDR content has been pre-processed to obtain the second SDR content, the second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the reconstructed version of the first SDR content.

## 4. BRIEF SUMMARY OF THE DRAWINGS

Fig. 1 illustrates schematically an example of context in which the various embodiments are implemented;
Fig. 2A illustrates a tone mapping curve;
Fig. 2B illustrates an inverse tone mapping curve without display adaptation;
Fig. 2C illustrates inverse tone mapping curves with display adaptation;
Fig. 3 presents some energy consumption values for different kinds of scenes, i.e., bright, intermediate, dim scene luminance.
Fig. 4A illustrates schematically an example of hardware architecture of a processing module able to implement various aspects and embodiments;
Fig. 4B illustrates a block diagram of an example of a first system in which various aspects and embodiments are implemented; and,
Fig. 4C illustrates a block diagram of an example of a second system in which various aspects and embodiments are implemented;
Fig. 5 illustrates a process executed by a first system according to various embodiments.; and,
Fig. 6 illustrates a process executed by the system B according to various embodiments.

## 5. DETAILED DESCRIPTION

The following embodiments relates to a global video chain (production, encoding, transmission, decoding and display rendering) and to a reduction of an overall energy consumed by this global video chain.

The context is a distribution of compressed HDR data representing a video content while, at the same time, distributing associated SDR data representing the same video content.

In the following, various examples rely on the SL-HDR1 HDR distribution technology (ETSI TS 103 433-1). However, these various embodiments also apply to any HDR distribution technology that relies on dynamic metadata (e.g. Dolby Vision, HDR10+, SL-HDR2, SL-HDR3).

HDR technology offers a better QoE of video content on a screen, but the power consumption is much more significant than SDR. The consumption of HDR monitors is sometimes up to two times higher than SDR monitors.

While the HDR technology is developing, it appeared that not all HDR capable display devices (or HDR displays) have the same capabilities for displaying HDR data. For instance, for some HDR displays, reconstructed HDR data may have a highest luminance value (i.e., a peak luminance) around "1000" nits while the HDR displays may be limited to render only up to "500" nits. A risk in that case is to let the HDR displays clipping roughly values above "500" nits and in particular, the highlights. Hence, the respect of the artistic intent of the video content is not insured.

When speaking about images, the artistic intent often relies on how tones, i.e., shadows, midtones, highlights, are distributed within the scenes. This is part of a color grading that an artist (i.e., a content creator) has to do in order to convey a desired emotion and/or to define a visual signature of the content.

Tonal zones can be defined as follows:

- Shadows: this corresponds to the lowest part of the color distribution (represented for example by a histogram of luminance values of an image) of a considered content;
- Midtones: this corresponds to the middle part of the color distribution of the considered content;
- Highlights: this corresponds to the highest part of the color distribution of a considered content.

In addition to these three tonal zones, it is common to define a black point as the pixel with the lowest sample value found within the shadows whereas the white point corresponds to the pixel with the lightest sample value found within the highlights.

Obviously, defining such black and white points is key during the color grading performed by artists. Increasing the black point leads to a scene in which areas darker than the black point are clipped. Similarly, decreasing the white point leads to a scene in which areas lighter than the white point are clipped. Clipping the highlights can result in a loss of valuable highlight details.

More "artistic intent" friendly solutions based on a display adaptation were proposed. Display adaptation allows adapting the reconstructed HDR signal to the display device luminance capacities while allowing getting the highest QoE and preserving the artistic intent of the HDR signal. For instance, display adaptation adjusts tones to preserve highlights which cannot be clipped.

By definition, the QoE is higher when the display adaptation adapts the reconstructed HDR signal to the luminance capability of the display device. However, this still comes with a high energy consumption. To make possible a trade-off between energy consumption and QoE, various embodiments described in the following propose to add an energy consumption dimension to adjust a peak luminance of the video content. The adjusted peak luminance is then used to adapt the reconstructed HDR signal to decrease the emitting light and therefore the energy consumption. Obviously, reducing the peak luminance will globally dim each frame of the video.

Reducing the energy consumption of electronic devices has become a requirement not only for electronic devices manufacturers but also to limit, as much as possible, the environmental impact and to contribute to the emergence of a sustainable display industry.

The increase in display resolution from SD to HD and from 2K to 4K and soon to 8K and beyond, has brought about a corresponding increase in energy requirements of display devices. This is not consistent with the global need to reduce energy consumption. Indeed, displays are an important source of energy consumption, whether it be for battery-powered devices (e.g., smartphones) or in the global video distribution chain.

Organic Light Emitting Diode (OLED) displays are finding more and more widespread use because of numerous advantages compared to transmissive displays such as Thin-Film Transistor Liquid Crystal Displays (TFT-LCDs). Rather than using a uniform backlight, OLED displays are composed of LEDs as image pixels. OLEDs power consumption is therefore highly correlated to the image content and can be readily estimated by considering the luminance level of the displayed image pixels. Although OLED displays consume energy in a controllable manner, they are still the most important source of energy consumption in a video transmission chain.

To reduce the energy consumption of displays by decreasing the amount of emitted light, several methods are used. They may rely on the control of the display peak luminance and therefore can significantly modify the tone distribution.

The control of the display peak luminance can be done for example, manually thanks to user-accessible brightness settings. A very common and straightforward approach is to use the brightness settings of the displays. The brightness control, manipulated by the user, can simply consist in adding or subtracting an offset into the red, green and blue signals. The mis adjustments of the brightness can lead to very poor quality with black and white values that can be either clipped, overexposed, or underexposed. Adjusting the brightness manually may definitively destroy the artistic intent.

The control of the display peak luminance can also be done automatically thanks to a peak luminance adjustment in function of an ambient light. A basic idea is to lower the peak luminance in dark environment and to increase it when the ambient light is high. The methods used by display manufacturers are proprietary and cannot respect the artistic intent, due to the lack of prior information. To respect the artistic intent, it would be necessary to determine the black point, the white point and to analyze the tonal distribution of the different scenes of a video content. It does not seem reasonable to do it at the display side.

A more elegant solution to control the display peak luminance is to use energy-aware images, i.e., image that need less energy when displayed on displays, notably OLED displays. Example of methods for computing energy-aware images can be found in document WO2022/238183., document with international application number PCT/EP2023/062360, and document with international application number PCT/EP2024/055276.

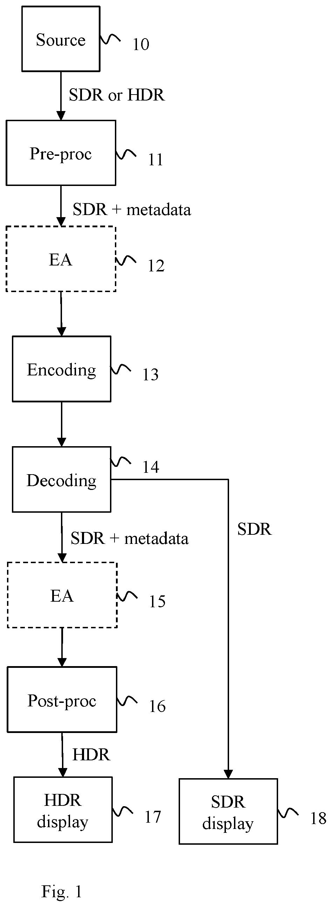

**Fig. 1** illustrates schematically an example of context in which the various embodiments are implemented.

In Fig. 1, a source device 10, such as a camera or a streaming system providing a video content, generates a video content. The source device 10 is for instance a SDR or HDR camera generating respectively a SDR or HDR video content.

The video content is then provided to a pre-processing module 11. The pre-processing module 11, for example, adapts a content to a SL-HDRx standard. For instance, the SL-HDRx standard is SL-HDR1. Therefore, when the video content is a HDR video, the pre-processing module 11 applies a tone mapping (TM) to the HDR video to generate a SDR video and generates SL-HDR1 metadata. When the video content is a SDR video, the pre-processing module 11 first estimates a HDR video and then applies a TM to the estimated HDR video to generate a SDR video and to generate the SL-HDR1 metadata. The HDR video has a peak of luminance called *master display peak luminance* corresponding generally to a peak luminance defined by the content creator. The SL-HDR1 metadata comprise information representative of an inverse tone mapping function and of a color correction function allowing to obtain a HDR video from a SDR video. These metadata could be dynamic and adapted to each image or group of images.

The SDR video and the SL-HDR1 metadata are then provided to an encoding module 13. The SDR video and the SL-HDR1 metadata are encoded by the encoding module 13 in a bitstream (i.e., in video data) using a video compression format such as AVC ((ISO/CEI 14496-10 / ITU-T H.264), HEVC (ISO/IEC 23008-2 - MPEG-H Part 2, High Efficiency Video Coding / ITU-T H.265)), VVC (ISO/IEC 23090-3 - MPEG-I, Versatile Video Coding/ ITU-T H.266), AV1,VP9, EVC (ISO/CEI 23094-1 Essential Video Coding) or any other video compression format adapted to encode a SDR video and SL-HDR1 metadata. For example, the SL-HDR1 metadata are encoded in a SL-HDR information SEI message as specified in annex A.2 of the ETSI TS 103.433 specification. The output of the encoding module 13 is a bitstream (i.e., video data) representing the encoded SDR video and the SL-HDR1 metadata.

The encoding module 13 then provides the video data to a decoding module 14 for instance via a network. The decoding module 14 decodes the bitstream to obtain a decoded (i.e., reconstructed) version of the SDR video and the SL-HDR1 metadata.

The reconstructed SDR video is provided directly to a display device 18 adapted to display SDR contents.

The SDR video and the SL-HDR1 metadata are also provided to a post-processing module 16. The post-processing module 16 applies an inverse tone mapping (ITM) step and a color correction step to the SDR video to obtain an HDR video.

The color correction comprises a computation of a Look-Up-Table (LUT) *lutCC()* from the SL-HDR1 metadata. The LUT *lutCC()* is then used to reconstruct the HDR chrominance signal of the HDR video.

For both constant luminance (CL) and non-constant luminance (NCL) modes, $lutCC(Y) = f(Y).(1/Y)$ with $f(Y) = 1 / (R \cdot sgf(1/Y))$ and $Y$ being a value representative of a luminance. Function *sgf(1/Y)* corresponds to the color correction function encoded in the SL-HDR1 metadata.

In NCL mode, *f(Y)* is a constant function, i.e., $f(Y) = \Omega$ so that $lutCC(Y) = \Omega.(1/Y)$.

In CL mode*, f(Y)* is not a constant function.

The ITM step comprises a derivation of a LUT *lutMapY()* from the SL-HDR1 metadata. The LUT *lutMapY()* is then used to perform the inverse tone mapping of the luminance signal of the SDR video to reconstruct the HDR luminance signal of the HDR video.

When a display adaptation is required (i.e., responsive to the HDR display 17 have a display peak luminance (called *target display peak luminance* in the following) lower than the master display peak luminance), the target display peak luminance is taken into account during the inverse tone mapping. Three cases are considered:

- the target display peak luminance is the same as the master display peak luminance. In that case the ITM curve is the inverse of the TM curve applied by the pre-processing module 11. The LUT *lutMapY()* is therefore derived directly from the SL-HDR1 metadata.
- the target display peak luminance is "100" nits (i.e., the HDR display 17 is a SDR display). In that case, the ITM curve is equal to the identity in the linear domain. In other words, when the target display peak luminance is "100" nits, the luminance of the reconstructed HDR signal is equal to the luminance of the reconstructed SDR signal. One can note that this latter is true for NCL mode but is not true for CL mode.
- the target display peak luminance is between "100" nits and the master display peak luminance. An ITM curve that is between the identity and the Inverse Tone Mapping curve specified in the SL-HDR1 metadata.

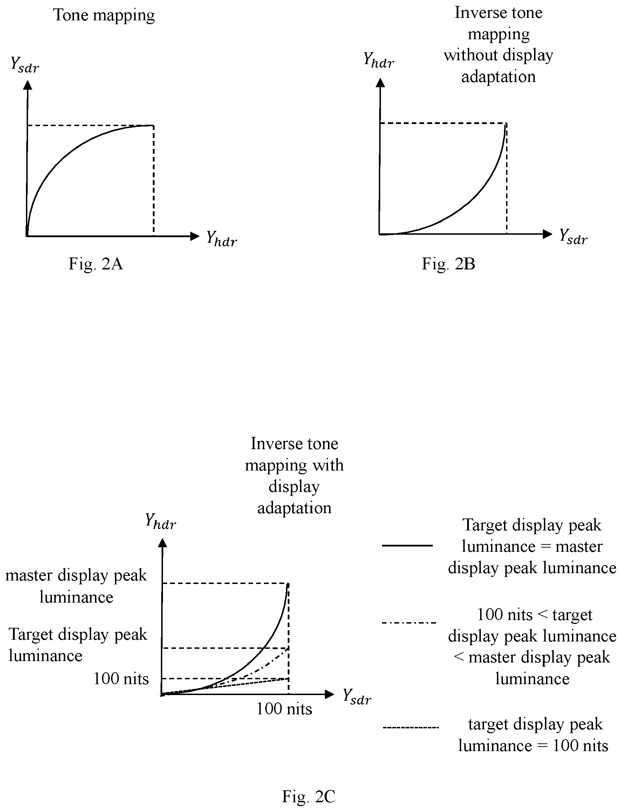

**Fig. 2A** illustrates a TM curve used by the pre-processing module 11 to generate a SDR video from an original HDR video.

**Fig. 2B** illustrates an ITM curve resulting from the inversion of the TM curve of Fig. 2A. The sequential application of the TM curve of Fig. 2A and of the ITM curve of Fig. 2B allows (in theory) obtaining back the original HDR video.

**Fig. 2C** illustrates a plurality of ITM curves obtained from the TM curve of Fig. 2A when a display adaptation process is applied.

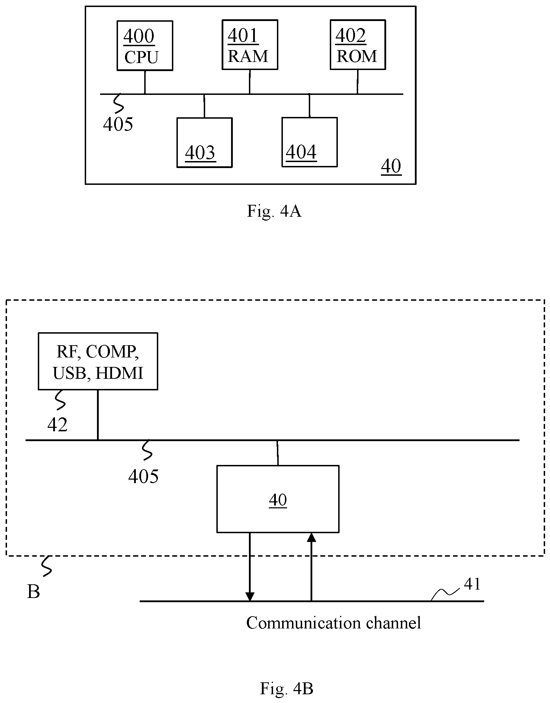

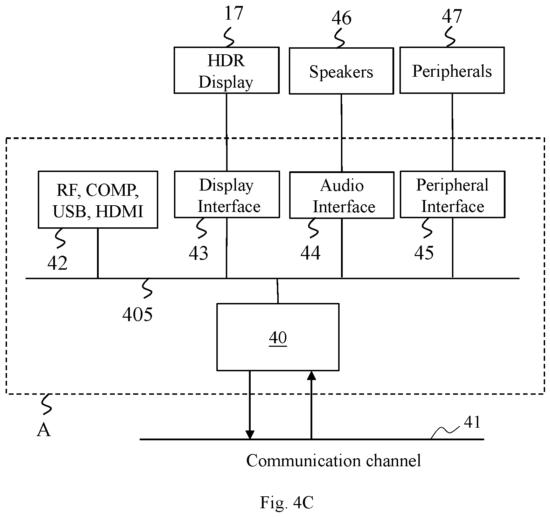

An example of process of deriving the LUT *lutMapY()* when the target display peak luminance is between "100" nits and the master display peak luminance is described in annex E of document ETSI TS 103 433-1 V1.2.1 (*High-Performance Single Layer High Dynamic Range (HDR) System for use in Consumer Electronics devices; Part 1: Directly Standard Dynamic Range (SDR) Compatible HDR System (SL-HDR1)*) called simply *SL-HDR1* in the following. Basically, this process consists in applying the process described in Fig. 4 of section 7.2.3.1.2 of document SL-HDR1 to compute a first LUT *lutMapY'()* representative of the ITM curve without display adaption (i.e. the first LUT *lutMapY'()* allows transforming the reconstructed SDR signal into the HDR signal with a peak of luminance equal to the master display peak luminance) and then to compute a second LUT *lutMapY"()* allowing mapping the HDR signal with a peak of luminance equal to the master display peak luminance to a HDR signal with a peak luminance equal to the target display peak luminance. The LUT *lutMapY()* is then the combination of the first LUT *lutMapY'()* and the second LUT *lutMapY"()*. In annex E of document SL-HDR1, the target display peak luminance is called maximum luminance of the presentation display and is represented by a variable $L_{pdisp}$.

One benefit of the display adaptation process of Annex E of document SL-HDR1 is to preserve as much as possible the artistic intent defined by the content creator.

Once reconstructed, the HDR video is then provided to the HDR display 17.

One can note that the post-processing module 16 could be integrated in the HDR display 17.

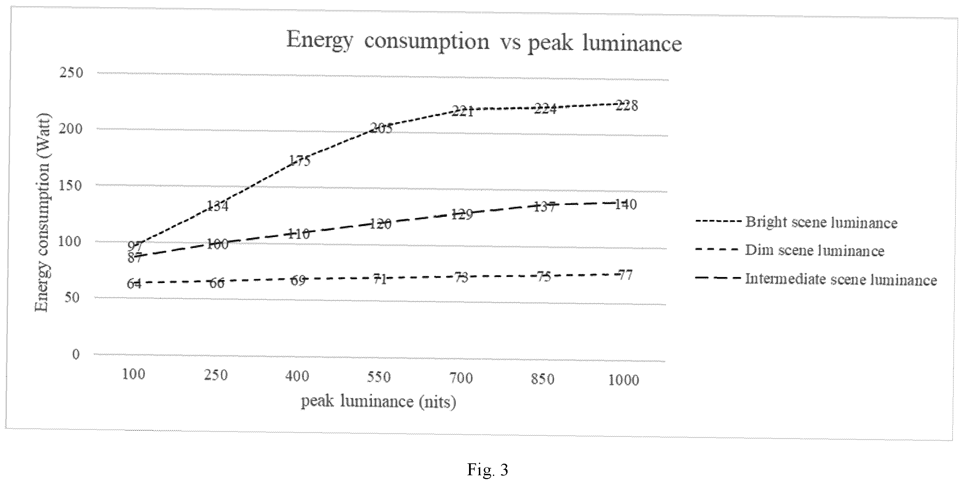

**Fig. 3** presents some energy consumption values for different kinds of HDR scenes, i.e., bright, intermediate, dim scene luminance. The energy consumption values are function of a peak luminance expressed in nits. In this example, an OLED (Organic Light-Emitting Diode) screen used for the test has a target display peak luminance of "1000" nits. Its energy consumption is therefore the highest for this value since the full capability of the screen is used. Decreasing the peak luminance of the displayed content allows to decrease the energy consumption. Interestingly, the amount of reduction significantly depends on the scene luminance.

**Fig. 4A** illustrates schematically an example of hardware architecture of a processing module 40 used for instance in the pre-processing module 11, in a pre-energy-aware module 12 (described later), in a post-energy-aware module 15 (described later) or in the post-processing module 16. The processing module 40 comprises, connected by a communication bus 405: a processor or CPU (central processing unit) 400 encompassing one or more microprocessors, general purpose computers, special purpose computers, and processors based on a multi-core architecture, as non-limiting examples; a random access memory (RAM) 401; a read only memory (ROM) 402; a storage unit 403, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 404 for exchanging data with other modules, devices, systems or equipment. The communication interface 404 can include, but is not limited to, a transceiver configured to transmit and to receive data over a communication network 41. The communication interface 404 can include, but is not limited to, a modem or a network card.

For example, the communication interface 404 enables for instance the processing module 40 to receive the HDR or SDR data and to output HDR or SDR data along with SL-HDR1 metadata.

The processor 400 is capable of executing instructions loaded into the RAM 401 from the ROM 402, from an external memory (not shown), from a storage medium, or from a communication network. When the processing module 40 is powered up, the processor 400 is capable of reading instructions from the RAM 401 and executing them. When the processing module 40 is comprised in the pre-processing module 11, these instructions form a computer program causing, for example, the implementation by the processor 400 of a TM process (when the source module generates a HDR video).

When the processing module 40 is comprised in the pre-processing module 11, these instructions form a computer program causing, for example, the implementation by the processor 400 of a TM process and a generation of SL-HDR1 metadata.

When the processing module 40 is comprised in the pre-energy-aware module 12 (described later in this document), these instructions form a computer program causing, for example, the implementation by the processor 400 of a pre-processing of the SDR content (i.e., SDR data) generated by the pre-processing module 11 allowing reducing the energy consumption.

When the processing module 40 is comprised in the post-energy-aware module 15 (described later in this document), these instructions form a computer program causing, for example, the implementation by the processor 400 of a process for regenerating the SDR content generated by the pre-processing module 11 from the output of the pre-energy-aware module 12.

When the processing module 40 is comprised in the post-processing module 16, these instructions form a computer program causing, for example, the implementation by the processor 400 of an ITM process comprising a display adaptation according to embodiments described in the following of this disclosure.

All or some of the algorithms and steps of said processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). Microprocessors, DSP, FPGA and ASIC are considered as electronic circuitry.

**Fig. 4C** illustrates a block diagram of an example of a system A implementing a post processing module in which various aspects and embodiments are implemented.

System A can be embodied as a device including various components or modules and is configured to generate a HDR or SDR displayable video. Examples of such system include, but are not limited to, various electronic systems such as personal computers, laptop computers, smartphones, tablet, TV, or set top boxes. Components of system A, singly or in combination, can be embodied in a single integrated circuit (IC), multiple ICs, and/or discrete components. For example, in at least one embodiment, the system A comprises at least one processing module 40 that implements the decoding module 14, the post-energy-aware module 15 and the post-processing module 16. In various embodiments, the system A is communicatively coupled to one or more other systems, or other electronic devices, via, for example, a communication bus or through dedicated input and/or output ports.

The input to the processing module 40 can be provided through various input modules as indicated in a block 42.

Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 4C, include composite video.

In various embodiments, the input modules of block 42 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system A to other electronic devices across USB and/or HDMI connections. It is to be understood that various aspects of input processing, for example, Reed-Solomon error correction, can be implemented, for example, within a separate input processing IC or within the processing module 40 as necessary. Similarly, aspects of USB or HDMI interface processing can be implemented within separate interface ICs or within the processing module 40 as necessary. The demodulated, error corrected, and demultiplexed stream is provided to the processing module 40.

Various elements of system A can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system A, the processing module 40 is interconnected to other elements of said system A by the bus 405.

The communication interface 404 of the processing module 40 allows the system A to communicate on the communication network 41. The communication network 41 can be implemented, for example, within a wired and/or a wireless medium.

Data is streamed, or otherwise provided, to the system A, in various embodiments, using a wireless network such as a Wi-Fi network, for example IEEE 802.11 (IEEE refers to the Institute of Electrical and Electronics Engineers). The Wi-Fi signal of these embodiments is received over the communications network 41 and the communications interface 404 which are adapted for Wi-Fi communications. The communications network 41 of these embodiments is typically connected to an access point or router that provides access to external networks including the Internet for allowing streaming applications and other over-the-top communications. Still other embodiments provide streamed data to the system A using the RF connection of the input block 42. As indicated above, various embodiments provide data in a non-streaming manner, for example, when the system A is a smartphone or a tablet. Additionally, various embodiments use wireless networks other than Wi-Fi, for example a cellular network or a Bluetooth network.

The system A can provide an output signal to various output devices using the communication network 41 or the bus 405. For example, the system A can provide a reconstructed HDR video.

The system A can provide an output signal to various output devices, including the HDR display 17, speakers 46, and other peripheral devices 47. The HDR display 17 of various embodiments includes one or more of, for example, a touchscreen display, an organic light-emitting diode (OLED) display, a curved display, and/or a foldable display. The HDR display 17 can be for a television, a tablet, a laptop, a cell phone (mobile phone), or other devices. The HDR display 17 can also be integrated with other components (for example, as in a smart phone), or separate (for example, an external monitor for a laptop). The other peripheral devices 47 include, in various examples of embodiments, one or more of a stand-alone digital video disc (or digital versatile disc) (DVR, for both terms), a disk player, a stereo system, and/or a lighting system. Various embodiments use one or more peripheral devices 47 that provide a function based on the output of the system A. For example, a disk player performs the function of playing the output of the system A.

In various embodiments, control signals are communicated between the system A and the HDR display 17, speakers 46, or other peripheral devices 47 using signaling such as AV.Link, Consumer Electronics Control (CEC), or other communications protocols that enable device-to-device control with or without user intervention. The output devices can be communicatively coupled to system A via dedicated connections through respective interfaces 43, 44, and 45. Alternatively, the output devices can be connected to system A using the communication network 41 via the communication interface 404. The HDR display 17 and speakers 46 can be integrated in a single unit with the other components of system A in an electronic device such as, for example, a television. In various embodiments, the display interface 43 includes a display driver, such as, for example, a timing controller (T Con) chip.

The HDR display 17 and speakers 46 can alternatively be separate from one or more of the other components, for example, if the RF module of block 42 is part of a separate set-top box. In various embodiments in which the HDR display 17 and speakers 46 are external components, the output signal can be provided via dedicated output connections, including, for example, HDMI ports, USB ports, or COMP outputs.

**Fig. 4B** illustrates a block diagram of an example of the system B adapted to implement the pre-processing module 11 in which various aspects and embodiments are implemented.

System B can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of system B, singly or in combination, can be embodied in a single integrated circuit (IC), multiple ICs, and/or discrete components. For example, in at least one embodiment, the system B comprises at least one processing module 40 that implement the pre-processing module 11, the pre-energy-aware module 12 and the encoding module 13. In various embodiments, the system B is communicatively coupled to one or more other systems, or other electronic devices, via, for example, a communications bus or through dedicated input and/or output ports.

The input to the processing module 40 can be provided through various input modules as indicated in block 42 already described in relation to Fig. 4C.

Various elements of system B can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system B, the processing module 40 is interconnected to other elements of said system B by the bus 405.

The communication interface 404 of the processing module 40 allows the system B to communicate on the communication network 41. The communication network 41 can be implemented, for example, within a wired and/or a wireless medium.

Data is streamed, or otherwise provided, to the system B, in various embodiments, using a wireless network such as a Wi-Fi network, for example IEEE 802.11 (IEEE refers to the Institute of Electrical and Electronics Engineers). The Wi-Fi signal of these embodiments is received over the communications network 41 and the communications interface 404 which are adapted for Wi-Fi communications. The communications network 41 of these embodiments is typically connected to an access point or router that provides access to external networks including the Internet for allowing streaming applications and other over-the-top communications. Still other embodiments provide streamed data to the system B using the RF connection of the input block 42. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), smartphones, tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a SDR image or video sequence and SL-HDRx metadata of a described embodiment. Such a signal can be formatted, for example, as an electromagnetic wave (for example, using a radio frequency portion of spectrum) or as a baseband signal. The formatting can include, for example, encoding a SDR image or video sequence with SL-HDR1 metadata in an encoded stream (i.e., in video data) and modulating a carrier with the encoded stream. The information that the signal carries can be, for example, analog or digital information. The signal can be transmitted over a variety of different wired or wireless links, as is known. The signal can be stored on a processor-readable medium.

The proposed embodiments aim to reduce the energy consumption by adjusting the amount of emitted light. These embodiments rely on the adjustment of the target output peak luminance by considering HDR dynamic metadata as well as an energy-aware pre-processing of the SDR content generated by the pre-processing module 11.

In an embodiment, the energy-aware pre-processing is applied by a pre-energy-aware module 12 on the SDR content generated by the pre-processing module 11. The pre-energy-aware module 12 outputs an energy-aware SDR content. The pre-energy-aware module 12 applies for example an energy-aware pre-processing method described in document PCT/EP2023/062360 on the SDR content generated by the pre-processing module 11. This energy-aware pre-processing method allows reducing the energy consumption when users watch the energy-aware SDR content or watch the HDR content (i.e., HDR data) reconstructed from the energy-aware SDR content. Therefore, instead of encoding the SDR content generated by the pre-processing module 11, the encoding module 13 encodes the energy-aware SDR content outputted by the pre-energy-aware module 12.

After the decoding by the decoding module 14 of the energy-aware SDR content and of the SL-HDR1 metadata (for example embedded in the SL-HDR information SEI message), regarding the display of the HDR content, two options are possible: either the HDR content is reconstructed from the decoded energy-aware SDR content or the HDR content is reconstructed from a regenerated SDR content corresponding to the SDR content generated by the pre-processing module 11 generated from the decoded energy-aware SDR content.

The regenerated SDR content has the same characteristics as the SDR content generated by the pre-processing module 11 in terms of energy consumption. Nevertheless, due to the encoding by the encoding module 13 and the decoding by the decoding module 14, since the encoding is lossy, slight differences exist between the regenerated SDR content and the SDR content generated by the pre-processing module 11.

In an embodiment, the regenerated SDR content results from a post-processing of the energy-aware SDR content applied by a post-energy-aware module 15. The post-energy-aware module 15 applies for example a method described in document PCT/EP2024/055276 when a strategy of the user is not to reduce the energy consumption and keep the best of his service experience.

In order to cover the two options, a new signalization in the SL-HDR metadata is proposed. This new signalization is for example included in the SL-HDR information SEI message syntax (as specified in annex A.2 of the ETSI TS 103.433 specification).

This new signalization indicates with a first information whether a SDR content generated by the SL-HDR Tone mapping module is energy-aware-pre-processed, a second information indicating by how much the energy-aware SDR content reduces the energy comparing to an initial SDR content (for example the one provided by the pre-processing module 11) and a third information indicating the method used to generate the energy-aware SDR content.

The first information is represented by a flag *eam_sdr_pre_processing* indicating whether the SDR content has been energy-aware-pre-processed or not.

If the flag *eam_sdr_pre_processing* indicates that the SDR content has been energy-aware-pre-processed, the second information representative of a ratio between the energy consumed by the energy-aware SDR content and the initial SDR content is signaled by a syntax element *eam_sdr_reduction_ratio.* An example of semantic of the syntax element *eam_sdr_reduction_ratio* is given in table TAB1, coded on "2" bits:

Table TAB 1

| eam_sdr_reduction_ratio | Semantic |
|---|---|
| 0 | The reduction ratio is 5% |
| 1 | The reduction ratio is 10% |
| 2 | The reduction ratio is 20% |
| 3 | The reduction ratio is 30% |

In another embodiment, when the flag *eam_pre_processing* indicates that the SDR content has been energy-aware-pre-processed, the syntax element *eam_sdr_reduction_ratio* specifies the ratio of energy reduction expected on the HDR content generated by the post-processing module 16 from the decoded energy-aware SDR content. For example, the value of the syntax element *eam_sdr_reduction_ratio* is between "0" and "100", coded on "7" bits.

If the flag *eam_sdr_pre_processing* indicates that the SDR content has been energy-aware-pre-processed, the third information indicating the method used to generate the energy-aware SDR content is encoded in the form of a syntax element *eam_sdr_reduction_method.* Table TAB2 provides an example of semantic of the syntax element *eam_sdr_reduction_method.*

Table TAB2

| eam_sdr_reduction_method | semantic |
|---|---|
| 0 | Linear scaling method |
| 1 | Histogram clipping |
| 2 | CNN-based network |
| 3 | Invertible Neural Network |
| 4 | User-defined |

In another embodiment, an additional syntax element *eam_sdr_recover* indicates whether or not the initial SDR content has to be regenerated before reconstructing the HDR video content or rendering it on a screen.

In a variant, the syntax element *eam_sdr_recover* has the semantic represented in table TAB3:

Table TAB3

| eam_sdr_recover | semantic |
|---|---|
| 00 | The initial SDR content shall not be recovered and the HDR content is not generated |
| 01 | The initial SDR content shall be recovered and the HDR content is not generated |
| 10 | The initial SDR content shall not be recovered and the HDR content shall be generated from the energy aware SDR content |
| 11 | The initial SDR content shall be recovered and the HDR content shal be generated from the recovered initia SDR content |

Thanks to the above semantic, several scenarios are possible. In each scenario, the pre-energy-aware module 12 generates an energy-aware SDR content from a SDR content generated by the pre-processing module 11 and the encoding module 13 encodes the energy-aware SDR content along with the SL-HDR1 metadata. The System A then distributes the data outputted by the encoding module 13.

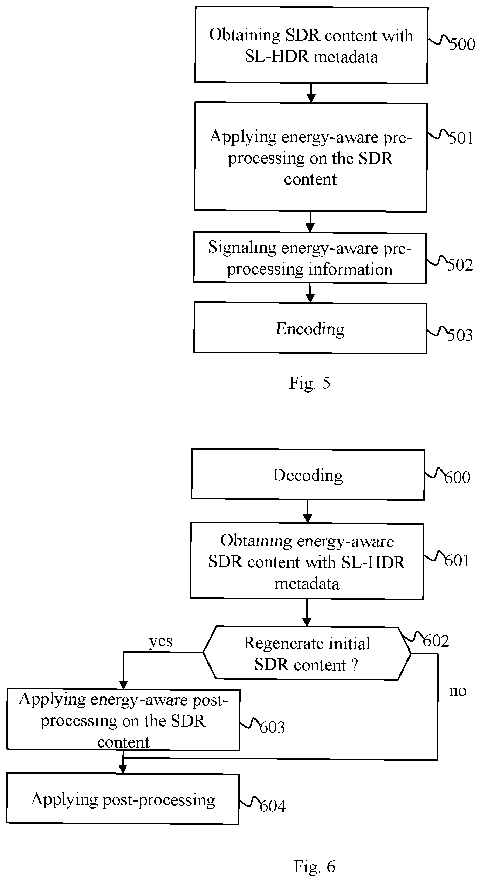

**Fig. 5** illustrates a process executed by the system A according to various embodiments.

In a step 500, the processing module 40 of the pre-energy-aware module 12 obtains a SDR content and SL_HDR1 metadata from the pre-processing module 11.

In a step 501, the processing module 40 of the pre-energy-aware module 12 applies an energy-aware pre-processing to the SDR content to obtain an energy-aware SDR content. The energy-aware pre-processing is for example one of the process represented in table TAB2. The energy-aware SDR content allows for example one of the energy reduction (either for displaying the energy-aware SDR content or for displaying a HDR content resulting from a post-processing of the energy-aware SDR content by the post-processing module 16) represented in table TAB1.

In a step 502, the processing module 40 of the pre-energy-aware module 12 signals energy-aware information in the SL-HDR1 metadata. For example, processing module 40 of the pre-energy-aware module 12 signals a flag *eam_pre_processing* equal to "1" indicating that the SDR content has been energy-aware-pre-processed by the pre-energy-aware module 12, a syntax element *eam_sdr_reduction_ratio* specifying a ratio of energy reduction expected on the HDR content generated by the post-processing module 16 from the energy-aware SDR content (for example *eam_sdr_reduction_ratio*=2)*,* a syntax element *eam_sdr_reduction_method* (for example *eam_sdr_reduction_method*=1) indicating the method used to generate the energy-aware SDR content and, optionally, a syntax element *eam_sdr_recover* indicating whether or not the initial SDR content has to be regenerated before reconstructing the HDR content.

In a step 503, the processing module 40 of the encoding module 13 encodes the energy-aware SDR content and the SL-HDR metadata.

**Fig. 6** illustrates a process executed by the system B according to various embodiments.

In a step 600, the processing module 40 of the decoding module 14 reconstructs the energy-aware SDR content and the SL-HDR metadata.

In a step 601, the processing module 40 of the post-energy-aware module 15 obtains the reconstructed energy-aware SDR content and the SL-HDR metadata.

In the step 601, the processing module 40 of the post-energy-aware module 15 obtains the energy-aware information. The processing module 40 of the post-energy-aware module 15 determines from the flag *eam_pre_processing* that the SDR content has been energy-aware pre-processed, from the syntax element *eam_sdr_reduction_ratio* the ratio of energy reduction that can be expected by displaying a HDR content resulting from a post-processing by the post-processing module 16 of the energy-aware SDR content (or the ratio of energy reduction that can be expected by displaying the energy-aware SDR content) and from the syntax element *eam_sdr_reduction_method* the method used to generate the energy-aware SDR content. Optionally, the processing module 40 of the post-energy-aware module 15 obtains the syntax element *eam_sdr_recover.*

In a step 602, from the decoded energy-aware information or optionally from the value of the syntax element *eam_sdr_recover,* the processing module 400 of the post-energy-aware module 15 determines whether it has to regenerate a SDR content representative of the initial SDR content generated by the pre-processing module 11 from the energy-aware SDR content or not.

One can note that in an embodiment, when the pre-energy-aware module 12 applies systematically the same method to the generate the energy-aware SDR content with the same energy reduction ratio, it may signal only the flag *eam_pre_processing.* Based on this flag, the processing module 400 of the post-energy-aware module 15 may determine systematically that it has to regenerate the SDR content representative of the initial SDR content generated by the pre-processing module 11 from the energy-aware SDR content.

If the SDR content representative of the initial SDR content have to be regenerated, the processing module 40 of the post-energy-aware module 15 applies in a step 603 an energy-aware post-processing to the energy-aware SDR content to regenerate these SDR content. For example, the processing module 40 of the post-energy-aware module 15 applies the method described in document PCT/EP2024/055276.

Step 603, or step 602 when the SDR content representative of the initial SDR content don't have to be regenerated, are followed by a step 604.

During step 604, the processing module of the post-processing module 16 generates HDR content from SDR content provided by the post-energy-aware module 15. Therefore, depending on the energy-aware information comprised in the SL-HDR metadata, the processing module 40 of the post-processing module 16 generates the HDR content either from the energy-aware content or from the SDR content representative of the initial SDR content.

In a variant, during step 603, the processing module 40 of the post-energy-aware module 15 generates a hybrid SDR content from the energy-aware SDR content and from the SDR content representative of the initial SDR content. The hybrid SDR content results from a linear combination between the energy-aware SDR content and the SDR content representative of the initial SDR content.

A first method for obtaining the hybrid SDR content is represented by the following equation:

$$new_{sdr}(x, y; t) = \alpha \times EA_{sdr}(x, y; t) + (1 - \alpha) \times Reco_{sdr}(x, y; t)$$

Where, $EA_{sdr}(x, y; t)$ is a sample at position *(x,y)* of a picture *t* of the energy-aware SDR content, $Reco_{sdr}(x, y; t)$ is a sample at position *(x,y)* of a picture *t* of the SDR content representative of the initial SDR content and a is a parameter varying between "0" and "1".

When the parameter a is equal to "0", the HDR content is reconstructed from the energy-aware SDR content.

When the parameter a is equal to "1", the HDR content is reconstructed from the SDR content representative of the initial SDR content.

When the parameter a is in the range 0 to 1, the HDR content is more or less energy-aware.

We can assume in a first approximation that the parameter a depends linearly on the attenuation ratio given by the syntax element *eam_sdr_reduction_ratio* as follows:

$$\alpha = \frac{1}{target(eam\_sdr\_reduction\_ratio\ )} \times target$$

where target is the new reduction desired and *target* < *target*(eam_sdr_reduction_ratio ).

For instance, if *eam_sdr_reduction_ratio* is equal to "0", *target*(*eam_sdr_reduction_ratio* ) = 5%, according to table TAB1. In this example, the variable *target,* i.e. the new target desired, should be between 5% and 0%.

If *eam_sdr_reduction_ratio* is equal to "2", *target*(*eam_sdr_reduction_ratio* ) = 20%, according to table TAB1. In this example, the variable *target,* i.e., the new target reduction ratio desired, should be between 20% and 0%.

We described above a number of embodiments. Features of these embodiments can be provided alone or in any combination. Further, embodiments can include one or more of the following features, devices, or aspects, alone or in any combination, across various claim categories and types:

- A TV, set-top box, cell phone, tablet, personal computer or other electronic device that performs at least one of the embodiments described, and that displays (e.g., using a monitor, screen, or other type of display) a resulting picture.

- A TV, set-top box, cell phone, tablet, personal computer or other electronic device that tunes (e.g., using a tuner) a channel to receive a signal including an encoded SDR video and SL-HDR metadata, and performs at least one of the embodiments described.

- A TV, set-top box, cell phone, tablet, or other electronic device that receives (e.g., using an antenna) a signal over the air that includes an encoded SDR video and SL-HDR , and performs at least one of the embodiments described.

- A server, camera, cell phone, tablet, personal computer or other electronic device that tunes (e.g., using a tuner) a channel to transmit a signal including a SDR video and SL-HDR metadata, and performs at least one of the embodiments described.

- A server, camera, cell phone, tablet, personal computer or other electronic device that transmits (e.g., using an antenna) a signal over the air that includes a SDR video and SL-HDR metadata, and performs at least one of the embodiments described.

**Claims**

1. A method comprising:

   obtaining (500) a first standard dynamic range (SDR) content and SL-HDR metadata allowing generating a first high dynamic range (HDR) content from the first SDR content;
   applying (501) a pre-processing to the first SDR content to obtain a second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the first SDR content;
   signaling (502) energy aware information in the SL-HDR metadata comprising a flag indicating that the first SDR content had been pre-processed to obtain the second SDR content; and,
   encoding the second SDR content and the SL-HDR metadata.

2. The method of claim 1 wherein, the energy aware information further comprises a syntax element indicating an energy reduction ratio.

3. The method of claim 1 or 2 wherein, the energy aware information further comprises a syntax element indicating a process for generating the second SDR content from the first SDR content among a plurality of methods.

4. The method of claim 1, 2 or 3 wherein, the energy aware information further comprises a syntax element indicating whether the first SDR content has to be regenerated to generate the output HDR content.

5. A method comprising:

   obtaining (601) a reconstructed version of a second standard dynamic range (SDR) content and SL-HDR metadata allowing generating a first high dynamic range (HDR) content from a first SDR content, the SL-HDR metadata comprising energy aware information comprising a flag indicating that the first SDR content has been pre-processed to obtain the second SDR content, the second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the reconstructed version of the first SDR content;
   determining (602) from the energy-aware information whether to regenerate an output SDR content corresponding to the first SDR content from the second SDR content or to keep the second SDR content as the output SDR content;
   obtaining (603) an intermediate SDR content from the output SDR content based on the determining; and,
   generating (604) the output HDR content from the output SDR content.

6. The method of claim 5 wherein, the energy-aware information further comprises a syntax element indicating an energy reduction ratio.

7. The method of claim 5 or 6 wherein, the energy-aware information further comprises a syntax element indicating a process used for generating the second SDR content from the first SDR content among a plurality of methods.

8. The method of claim 5, 6 or 7, wherein the energy-aware information further comprises a syntax element indicating whether the first SDR content has to be regenerated to generate the output HDR content.

9. The method of any previous claim from claim 5 to 8 wherein, responsive to the output SDR content corresponding to the first SDR content is regenerated from the second SDR content, the intermediate SDR content is a linear combination between the second SDR content and the output SDR content.

10. The method of claim 9 when depending on claim 6 wherein, a weighting factor used in the linear combination depends on the energy reduction ratio.

11. A device comprising electronic circuitry configured for:

    obtaining (500) a first standard dynamic range (SDR) content and SL-HDR metadata allowing generating a first high dynamic range (HDR) content from the first SDR content;
    applying (501) a pre-processing to the first SDR content to obtain a second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the first SDR content;
    signaling (502) energy-aware information in the SL-HDR metadata comprising a flag indicating that the first SDR content had been pre-processed to obtain the second SDR content; and,
    encoding the second SDR content and the SL-HDR metadata.

12. A device comprising electronic circuitry configured for:

    obtaining (601) a reconstructed version of a second standard dynamic range (SDR) content and SL-HDR metadata allowing generating a first high dynamic range (HDR) content from a first SDR content, the SL-HDR metadata comprising energy-aware information comprising a flag indicating that the first SDR content has been pre-processed to obtain the second SDR content, the second SDR content allowing obtaining an energy reduction either for displaying the second SDR content with respect to an energy consumed for displaying the first SDR content or for displaying an output HDR content generated from the second SDR content with respect to an energy consumed for displaying an output HDR content generated from the reconstructed version of the first SDR content;

determining (602) from the energy-aware information whether to regenerate an output SDR content corresponding to the first SDR content from the second SDR content or to keep the second SDR content as the output SDR content;

obtaining (603) an intermediate SDR content from the output SDR content based on the determining; and,

generating (604) the output HDR content from the output SDR content.

13. The device of claim 11 or 12 wherein, the energy-aware information further comprises at least one of a syntax element indicating an energy reduction ratio, a syntax element indicating a method used for generating the second SDR content from the first SDR content among a plurality of methods, a syntax element indicating whether the first SDR content has to be regenerated to generate the output HDR content.

14. The device of claim 11, 12 or 13 wherein, responsive to the output SDR content corresponding to the first SDR content is regenerated from the second SDR content, the intermediate SDR content is a linear combination between the second SDR content and the output SDR content.

15. The device of claim 14 when depending on claim 13 wherein, a weighting factor used in the linear combination depends on the energy reduction ratio.

Fig. 1

Tone mapping

$Y_{sdr}$

$Y_{hdr}$

Fig. 2A

Inverse tone
mapping
without display
adaptation

$Y_{hdr}$

$Y_{sdr}$

Fig. 2B

Inverse tone
mapping with
display
adaptation

$Y_{hdr}$

master display peak
luminance

Target display peak
luminance

100 nits

100 nits

$Y_{sdr}$

Target display peak
luminance = master
display peak luminance

100 nits < target
display peak luminance
< master display peak
luminance

target display peak
luminance = 100 nits

Fig. 2C

Fig. 3

| | | |
|---|---|---|
| **400**<br>CPU | **401**<br>RAM | **402**<br>ROM |

405

| | |
|---|---|
| **403** | **404** |

40

Fig. 4A

RF, COMP,
USB, HDMI

42

405

40

B

Communication channel

41

Fig. 4B

17    46    47

| HDR Display | Speakers | Peripherals |

| RF, COMP, USB, HDMI | Display Interface | Audio Interface | Peripheral Interface |

42    43    44    45

405

40

A

41

Communication channel

Fig. 4C

Obtaining SDR content with
SL-HDR metadata $\quad$ 500

Applying energy-aware pre-
processing on the SDR
content $\quad$ 501

Signaling energy-aware pre-
processing information $\quad$ 502

Encoding $\quad$ 503

Fig. 5

Decoding $\quad$ 600

Obtaining energy-aware
SDR content with SL-HDR
metadata $\quad$ 601

yes $\quad$ Regenerate initial
SDR content ? $\quad$ 602

no

Applying energy-aware post-
processing on the SDR
content $\quad$ 603

Applying post-processing $\quad$ 604

Fig. 6

Europäisches
Patentamt

European
Patent Office

Office européen
des brevets

# EUROPEAN SEARCH REPORT

**Application Number**

EP 24 30 5575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANÇOIS (INTERDIGITAL) E ET AL: "AHG9: Out-of-loop luma mapping with chroma scaling using APS or SEI message parameters signalling", 21. JVET MEETING; 20210106 - 20210115; TELECONFERENCE; (THE JOINT VIDEO EXPLORATION TEAM OF ISO/IEC JTC1/SC29/WG11 AND ITU-T SG.16 ), , no. JVET-U0078 30 December 2020 (2020-12-30), XP030293183, Retrieved from the Internet: URL:https://jvet-experts.org/doc_end_user/ documents/21_Teleconference/wg11/JVET-U007 8-v1.zip JVET-U0078.docx [retrieved on 2020-12-30] * the whole document * | 1-15 | INV. H04N19/30 H04N19/46 H04N19/70 |
| X | US 2018/115777 A1 (PIRAMANAYAGAM SANKARANARAYANAN [US] ET AL) 26 April 2018 (2018-04-26) * page 1 - page 8 * | 1,5,11, 12 | **TECHNICAL FIELDS SEARCHED (IPC)** |
| E | WO 2024/156544 A1 (INTERDIGITAL CE PATENT HOLDINGS SAS [FR]) 2 August 2024 (2024-08-02) * page 1 - page 28 * | 1-15 | H04N |

The present search report has been drawn up for all claims

| Place of search | Date of completion of the search | Examiner |
|---|---|---|
| Munich | 9 September 2024 | Cyranka, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5575

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | Publication date |
|---|---|---|---|
| US 2018115777 A1 | 26-04-2018 | CN 107995497 A<br>US 2018115777 A1 | 04-05-2018<br>26-04-2018 |
| WO 2024156544 A1 | 02-08-2024 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022238183 A
- EP 2023062360 A
- EP 2024055276 W
- EP 2023062360 W